# EUROPÄISCHE PATENTANMELDUNG

(11) **EP 3 002 466 A1**
(43) Veröffentlichungstag der Anmeldung: **06.04.2016**
(21) Anmeldenummer: 14464008.3
(22) Anmeldetag: 30.09.2014
(51) Int. Cl.: F16B 3/00

(54) **Vorrichtung und Verfahren zum Herstellen einer Vorrichtung**

(71) Anmelder: Continental Automotive GmbH, 30165 Hannover (DE)
(72) Erfinder: Homutescu, Adrian, 700017 Iasi (RO)

(57) **Zusammenfassung**

Die Erfindung betrifft eine Vorrichtung mit einem ersten Bauteil und einem zweiten Bauteil, wobei das erste Bauteil einen Vorsprung aufweist und das zweite Bauteil eine dazu komplementäre Ausnehmung aufweist, und wobei der Vorsprung derart in der Ausnehmung aufgenommen ist, dass das erste Bauteil relativ zum zweiten Bauteil zumindest hinsichtlich Verschiebung und Drehung in einer Ebene fixiert ist.

## Beschreibung

Die Erfindung betrifft eine Vorrichtung, welche ein erstes Bauteil und ein zweites Bauteil aufweist. Die Erfindung betrifft des Weiteren ein Verfahren zum Herstellen einer solchen Vorrichtung.

Es kommt häufig vor, dass Vorrichtungen mit einem ersten Bauteil und einem zweiten Bauteil aufgebaut werden, wobei die beiden Bauteile in definierter Relation zueinander angeordnet sein sollen. Beispielsweise sollen sie bezüglich Position, Abstand und Winkel relativ zueinander fixiert sein. Gemäß dem Stand der Technik ist es beispielsweise bekannt, dass hierzu das erste Bauteil zwei voneinander beabstandete, vorstehende Stifte aufweist, wobei ein erster Stift in eine komplementäre runde Ausnehmung des zweiten Bauteils eingreift und ein zweiter Stift in eine längliche Ausnehmung des zweiten Bauteils eingreift. Der erste Stift fixiert auf diese Weise die Position der beiden Bauteile relativ zueinander in einer x-y-Ebene, während der zweite Stift den Winkel der beiden Bauteile zueinander fixiert.

Die bekannte Ausgestaltung einer Verbindung zwischen den beiden Bauteilen erlaubt zwar eine präzise Fixierung deren relativer Lage, stellt jedoch hohe Anforderungen an die Präzision bei automatischen Fertigungsverfahren.

Es ist deshalb eine Aufgabe der Erfindung, eine Vorrichtung mit einem ersten Bauteil und einem zweiten Bauteil bereitzustellen, bei welcher die beiden Bauteile auf besser zu handhabende Weise relativ zueinander fixiert sind. Es ist des Weiteren eine Aufgabe der Erfindung, ein Verfahren zum Herstellen einer solchen Vorrichtung vorzusehen.

Dies wird erfindungsgemäß durch eine Vorrichtung nach Anspruch 1 und ein Verfahren nach Anspruch 15 erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft eine Vorrichtung mit einem ersten Bauteil und einem zweiten Bauteil. Das erste Bauteil weist einen Vorsprung auf und das zweite Bauteil weist eine Ausnehmung auf. Der Vorsprung weist zumindest einen ersten Steg und einen über den Steg hinausstehenden Stab auf. Die Ausnehmung weist zumindest einen zum ersten Steg komplementären ersten länglichen Abschnitt und einen zum Stab komplementären runden Abschnitt auf. Der Vorsprung ist derart in der Ausnehmung aufgenommen, dass das erste Bauteil relativ zum zweiten Bauteil zumindest hinsichtlich Verschiebung und Drehung in einer Ebene quer zum Stab fixiert ist.

Bei der erfindungsgemäßen Vorrichtung kann beispielsweise der Stab zuerst in die Ausnehmung aufgenommen werden, wodurch die beiden Bauteile bezüglich ihrer Lage in einer Ebene relativ zueinander fixiert werden, und anschließend kann durch weitere Annäherung der beiden Bauteile mittels des Stegs auch der Winkel der beiden Bauteile relativ zueinander fixiert werden. Dies kann beispielsweise dadurch erreicht werden, dass der Vorsprung im Bereich des Stabes größer bzw. höher ist als im Bereich des Stegs. Dies erlaubt eine einfachere Herstellung der Vorrichtung, insbesondere sind Anforderungen an die Positionierung vor Beginn eines Zusammenfügungsprozesses geringer als bei Ausführungen gemäß dem Stand der Technik.

Gemäß einer Ausführung sind der Vorsprung aus Metall und das zweite Bauteil aus Plastik ausgebildet. Gemäß einer alternativen Ausführung sind sowohl der Vorsprung wie auch das zweite Bauteil aus Plastik ausgebildet. Gemäß einer nochmals alternativen Ausführung sind sowohl der Vorsprung wie auch das zweite Bauteil aus Metall ausgebildet. Es sei verstanden, dass derjenige Teil des ersten Bauteils, welcher sich außerhalb des Vorsprungs befindet, aus dem gleichen Material sein kann wie der Vorsprung. Insbesondere kann der Vorsprung einstückig mit dem Rest des ersten Bauteils ausgebildet sein. Der Rest des ersten Bauteils kann jedoch auch aus einem anderen Material ausgebildet sein.

Bevorzugt grenzt der erste Steg unmittelbar an den Stab an, wobei ferner der erste längliche Abschnitt unmittelbar an den runden Abschnitt angrenzt. Dies ermöglicht eine kompakte Ausführung von Vorsprung und Ausnehmung.

Gemäß einer bevorzugten Ausführung weist der Vorsprung ferner einen zweiten Steg auf, wobei die Ausnehmung ferner einen zum zweiten Steg komplementären zweiten länglichen Abschnitt aufweist. Dies ermöglicht eine bessere Fixierung des Winkels der beiden Bauteile relativ zueinander, da diese Fixierung nicht nur durch den ersten Steg, sondern bei dieser Ausführung auch durch den zweiten Steg erfolgt.

Der Stab ist dabei bevorzugt zwischen dem ersten Steg und dem zweiten Steg angeordnet, wobei ferner der runde Abschnitt zwischen dem ersten länglichen Abschnitt und dem zweiten länglichen Abschnitt angeordnet ist. Dies ermöglicht' eine besonders kompakte Bauweise des Vorsprungs.

Bevorzugt grenzt der zweite Steg unmittelbar an den Stab an, wobei ferner der zweite längliche Abschnitt unmittelbar an den runden Abschnitt angrenzt. Dies ermöglicht ebenfalls eine besonders kompakte Ausführung des Vorsprungs und der Ausnehmung.

Gemäß einer bevorzugten Ausführung sind der erste Steg, der Stab und der zweite Steg entlang einer gedachten geraden Linie angeordnet. Ferner sind gemäß dieser Ausführung der erste längliche Abschnitt, der runde Abschnitt und der zweite längliche Abschnitt entlang einer gedachten geraden Linie angeordnet. In einer solchen Ausführung können insbesondere der erste Steg und der zweite Steg bezüglich einer mittig durch den Stab gehenden Achse um 180° rotationssymmetrisch zueinander angeordnet sein. Sie können auch relativ zu einer Ebene, durch welche die Achse geht, spiegelsymmetrisch zueinander ausgebildet sein. Dies ermöglicht eine gewisse Symmetrie in Vorsprung und Ausnehmung und damit beispielsweise eine einfache Montage oder auch die Möglichkeit, das erste Bauteil und das zweite Bauteil in zwei um 180° verschiedenen Winkelbeziehungen relativ zueinander zur Vorrichtung zusammenzufügen.

Die Anordnung entlang einer gedachten geraden Linie bezieht sich bevorzugt auch auf eine jeweilige Längserstreckung der Stege.

Es sei verstanden, dass die gedachte gerade Linie hier lediglich ein Hilfskonstrukt ist, welche in einer typischen Vorrichtung nicht eingezeichnet ist, jedoch typischerweise vom Fachmann einfach erkannt werden kann.

Der Vorsprung und die Ausnehmung sind bevorzugt frei von Hinterschneidungen. Dies erleichtert den Montageprozess der beiden Bauteile zur Vorrichtung.

Der Stab weist bevorzugt an seinem freien Ende einen Abschnitt auf, in welchem sich der Stab zum freien Ende hin verjüngt. Der Abschnitt kann sich auch über den ganzen Stab erstrecken. Dies ermöglicht eine noch weiter verbesserte Toleranz gegenüber nicht exakten Positionsbeziehungen der beiden Bauteile relativ zueinander während des Herstellungsprozesses.

Gemäß einer bevorzugten Ausführung weist das erste Bauteil ferner eine Basis auf, welche unterhalb des Vorsprungs angeordnet ist und welche einen Mindestabstand zwischen dem ersten Bauteil und dem zweiten Bauteil definiert. Dabei kann es sich beispielsweise um eine Fortführung des den Vorsprung bildenden Materials handeln, wobei dieses Material im Bereich der Basis im Vergleich zum Vorsprung aufgeweitet ist. Das zweite Bauteil kann somit an das erste Bauteil angenähert werden, wobei der Vorsprung in die Ausnehmung eingreift, und diese Annäherung wird gestoppt, sobald das zweite Bauteil auf der Basis aufliegt. Ein durch die Basis definierter Mindestabstand kann somit nicht unterschritten werden.

Gemäß einer bevorzugten Ausführung ist die Basis kreuzförmig ausgebildet. Dies erlaubt eine Abstützung des zweiten Bauteils auf der Basis in vier Richtungen, welche vom Vorsprung ausgehen.

Gemäß einer bevorzugten Ausführung ist der runde Abschnitt mit zunehmendem Abstand vom ersten Bauteil verjüngend ausgebildet. Damit kann eine noch weitere Verbesserung der Toleranz gegenüber nicht exakter Positionierung während des Herstellungsprozesses erreicht werden. Insbesondere kann während einer Abstandsverringerung des zweiten Bauteils zum ersten Bauteil hin die relative Position der beiden Bauteile zueinander kontinuierlich dem gewünschten Wert angepasst werden.

Gemäß einer bevorzugten Ausführung sind der erste längliche Abschnitt und/oder der zweite längliche Abschnitt mit zunehmendem Abstand vom ersten Bauteil verjüngend ausgebildet. Auch dies ermöglicht eine bessere Toleranz gegen Ungenauigkeiten bei der Positionierung während des Herstellungsprozesses, und zwar in diesem Fall insbesondere hinsichtlich größerer Winkeltoleranzen.

Gemäß einer bevorzugten Ausführung weist der runde Abschnitt einen Klemmbereich auf, welcher im montierten Zustand vom Stab elastisch deformiert ist und dadurch eine Klemmwirkung zwischen dem runden Abschnitt und dem Stab erzeugt. Der runde Abschnitt kann auch außenseitig eine Anzahl von Vorsprüngen aufweisen, welche sich bevorzugt zumindest im Wesentlichen parallel zum runden Abschnitt erstrecken. Die Vorsprünge können sich auch entlang einer konischen Oberfläche des Stabs erstrecken, und zwar insbesondere in Ebenen, welche die Symmetrieachse des Stabs enthalten. Mit derartigen Maßnahmen wird eine besonders gute Fixierung erreicht und es kann auch ein Schutz gegen unbeabsichtigtes Entfernen der beiden Bauteile voneinander erreicht werden, da die Bauteile auf diese Weise miteinander verklemmt sind.

Gemäß einer bevorzugten Ausführung weisen der erste Steg und/oder der zweite Steg eine jeweilige Oberseite auf, welche mit zunehmender Entfernung vom Stab abfallend ausgebildet ist. Unter einer Oberseite wird dabei insbesondere eine Seite oder Fläche verstanden, welche vom Rest des ersten Bauteils weg zeigt. Der Begriff des Abfallens bezieht sich typischerweise relativ zum Rest des ersten Bauteils. Durch eine solche Ausführung kann der Winkel zwischen den beiden Bauteilen während einer Verringerung des Abstands zwischen den beiden Bauteilen kontinuierlich zum gewünschten Wert hin verbessert werden, wobei die Ausnehmung während der Abstandsverringerung mit immer weiter außen liegenden Teilen der Stege in Eingriff kommt.

Die Erfindung betrifft des Weiteren ein Verfahren zum Herstellen einer erfindungsgemäßen Vorrichtung, welches folgende Schritte aufweist:
- Aufsetzen des zweiten Bauteils auf den Vorsprung des ersten Bauteils derart, dass der Stab in dem runden Abschnitt aufgenommen wird,
- Verringern des Abstands zwischen dem zweiten Bauteil und dem ersten Bauteil, dabei Drehen des zweiten Bauteils relativ zum ersten Bauteil derart, dass die Stege in jeweils einem der länglichen Abschnitte aufgenommen werden,
- und zwar solange, bis ein konstruktiv vorgegebener Mindestabstand erreicht wird.

Das erfindungsgemäße Verfahren ermöglicht insbesondere ein besonders vorteilhaftes Herstellen einer erfindungsgemäßen Vorrichtung. Hinsichtlich der erfindungsgemäßen Vorrichtung und deren Ausgestaltung, insbesondere bezüglich der Ausgestaltung des Vorsprungs und der Ausnehmung, kann auf alle weiter oben beschriebenen Ausführungen und Varianten zurückgegriffen werden. Erläuterte Vorteile gelten entsprechend.

Beim Schritt des Aufsetzens des zweiten Bauteils auf den Vorsprung des ersten Bauteils wird typischerweise eine grobe Positionierung der beiden Bauteile relativ zueinander erreicht. Dies kann beispielsweise in einer x-y-Ebene die Position der beiden Bauteile zueinander zumindest annähernd fixieren. Der Winkel ist dabei typischerweise noch nicht festgelegt.

Während der Abstand zwischen dem zweiten Bauteil und dem ersten Bauteil verringert wird, greift dann typischerweise zumindest ein Steg oder auch zwei Stege in die Ausnehmung des zweiten Bauteils ein, wodurch auch der Winkel zwischen dem zweiten Bauteil und dem ersten Bauteil sukzessive dem gewünschten Winkel angepasst wird. Dabei kann beispielsweise das zweite Bauteil aufgrund der Zusammenwirkung des jeweiligen Stegs mit dem jeweils zugehörigen länglichen Abschnitt der Ausnehmung gedreht werden.

Der konstruktiv vorgegebene Mindestabstand kann beispielsweise durch die weiter oben erwähnte Basis definiert werden. Sofern keine Basis vorhanden ist, kann der konstruktiv vorgegebene Mindestabstand auch Null sein, was beispielsweise bedeuten kann, dass das erste Bauteil flächig am zweiten Bauteil anliegt.

Es sei verstanden, dass sich die Erfindung auch auf das erste Bauteil, auf den Vorsprung, auf das zweite Bauteil und auf die Ausnehmung separat bezieht. Diese können somit auch separat beansprucht werden. Dabei kann auf alle jeweils beschriebenen Ausführungen und Varianten zurückgegriffen werden. Ebenso sei verstanden, dass alle mit Bezug auf das erfindungsgemäße Verfahren offenbarten Merkmale auch in Zusammenhang mit der erfindungsgemäßen Vorrichtung als offenbart gelten.

Weitere Merkmale und Vorteile der Erfindung wird der Fachmann den nachfolgend mit Bezug auf die beigefügte Zeichnung beschriebenen Ausführungsbeispielen entnehmen.

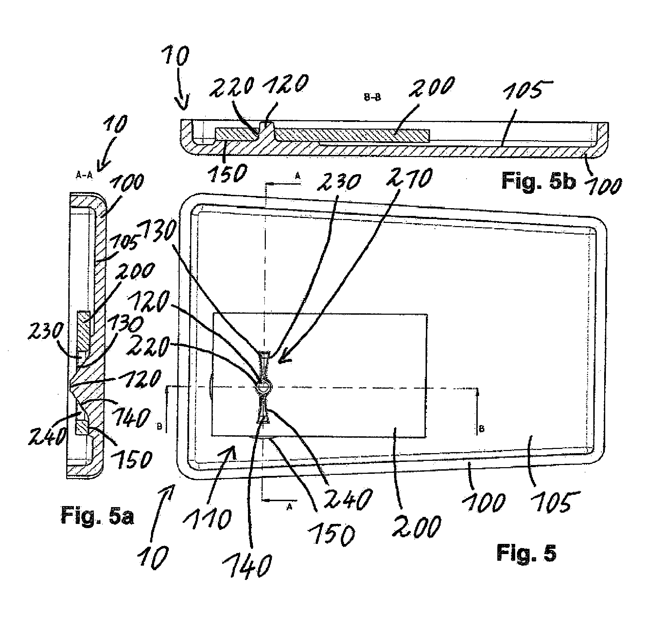

Dabei zeigen:
Fig. 1: ein erstes Bauteil,
Fig. 2a, 2b: ein zweites Bauteil,
Fig. 3, 3a, 3b: das erste Bauteil von Fig. 1 in einer anderen Ansicht,
Fig. 4, 4a, 4b: das zweite Bauteil von Fig. 2a, 2b in einer anderen Ansicht,
Fig. 5, 5a, 5b: eine Vorrichtung mit dem ersten Bauteil von

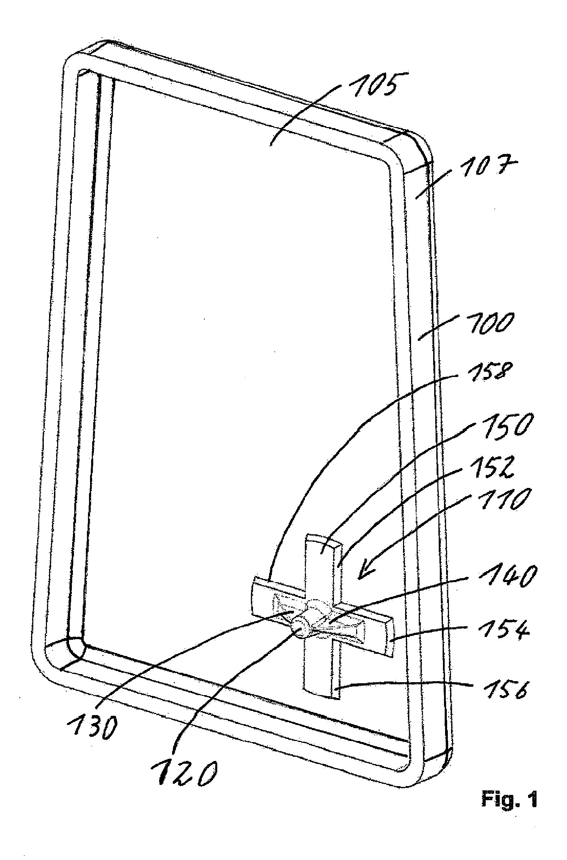

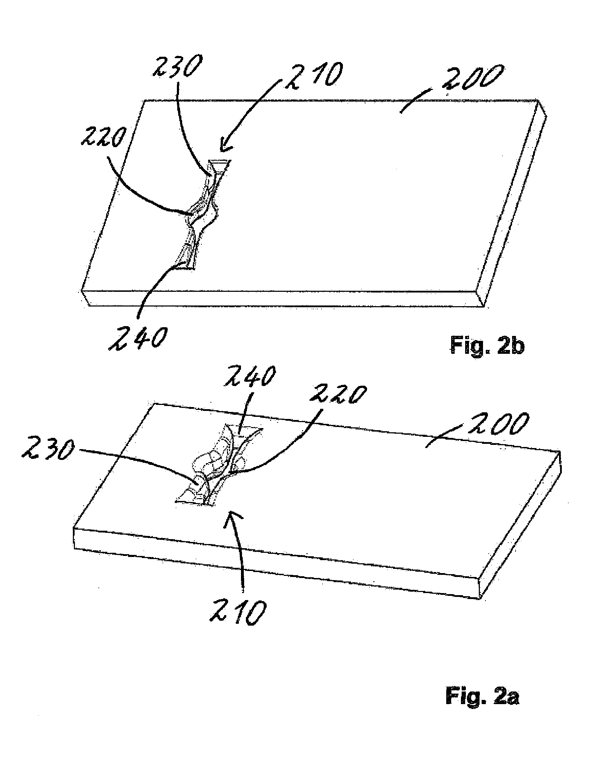

Fig. 1 und dem zweiten Bauteil von Fig. 2,

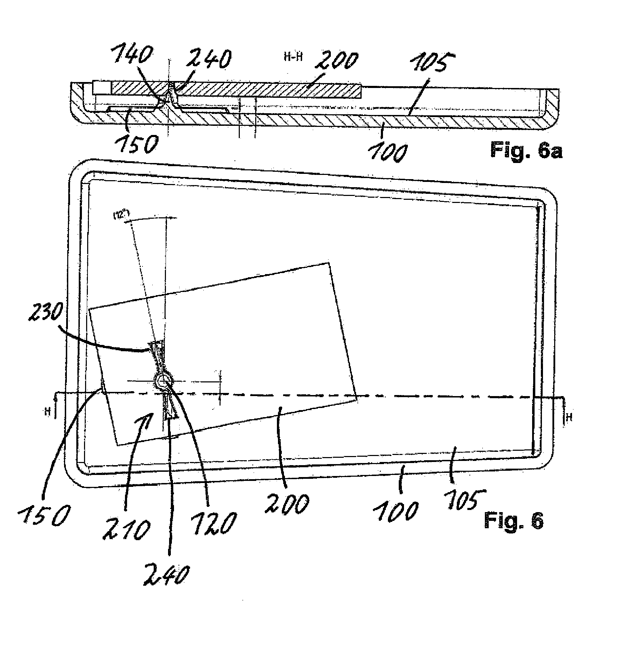

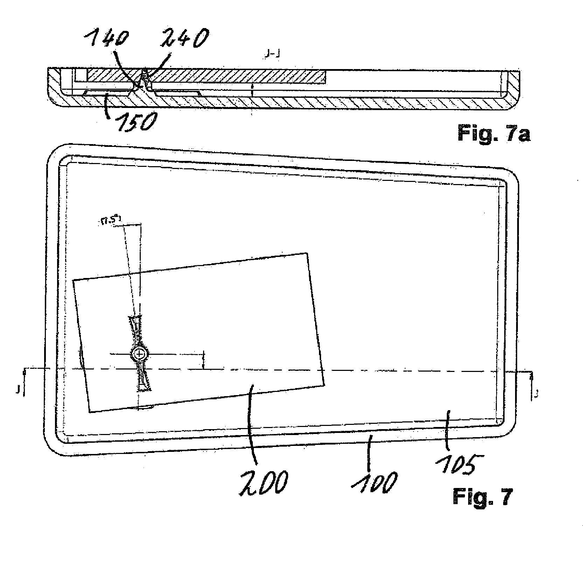

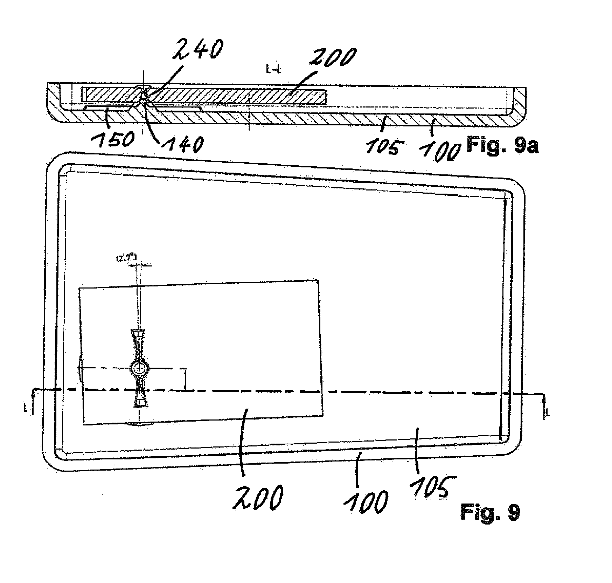

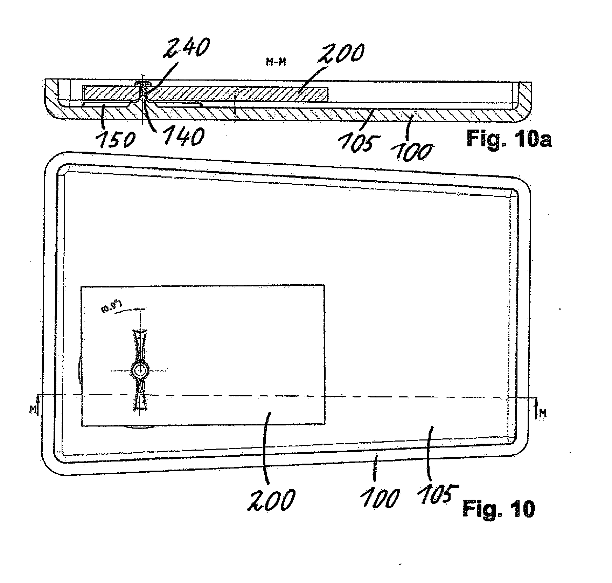

Fig. 6 bis 11b: das erste Bauteil von Fig. 1 und das zweite Bauteil von Fig. 2 in unterschiedlichen Winkelbeziehungen und Abständen zueinander, mit zunehmender Annäherung an einen gewünschten Endzustand
Fig. 12, 12a, 12b,
12c, 12d: die Vorrichtung von Fig. 5 in unterschiedlichen Ansichten,

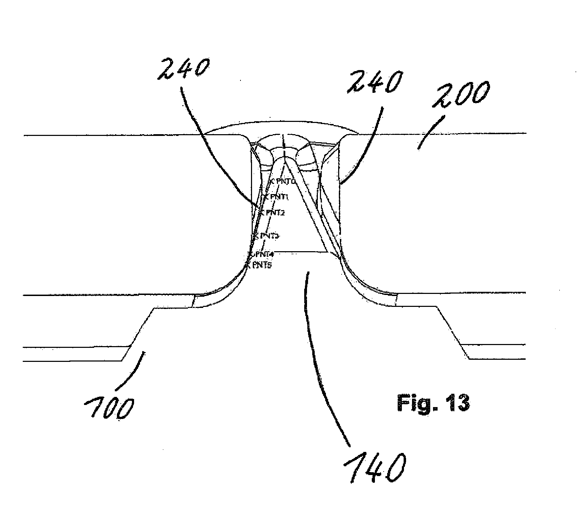

Fig. 13: eine Querschnittsansicht durch die Vorrichtung,

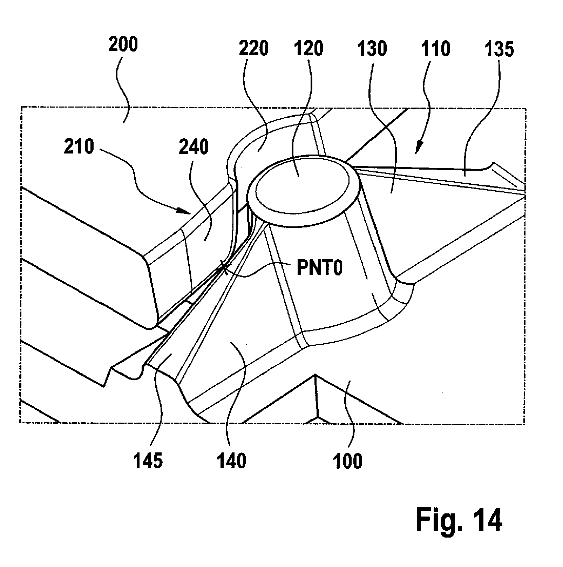

Fig. 14: eine Detailansicht der Vorrichtung,

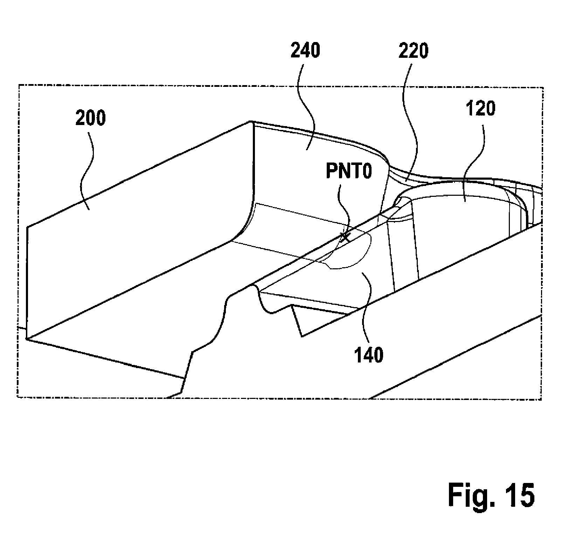

Fig. 15: eine weitere Detailansicht der Vorrichtung,

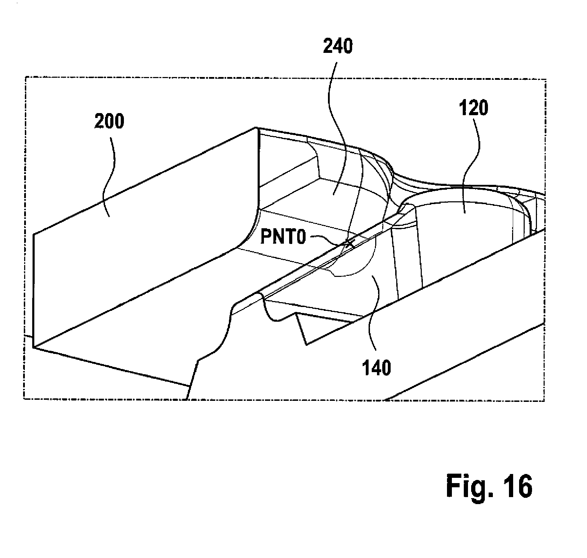

Fig. 16: eine weitere Detailansicht der Vorrichtung,

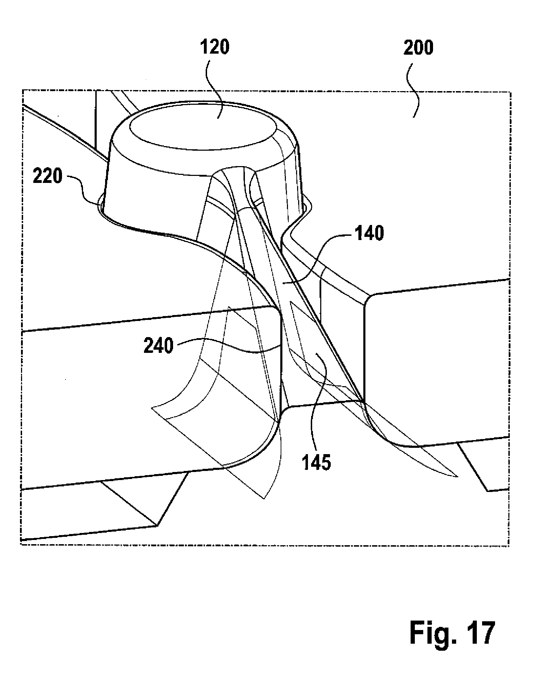

Fig. 17: eine weitere Detailansicht der Vorrichtung,

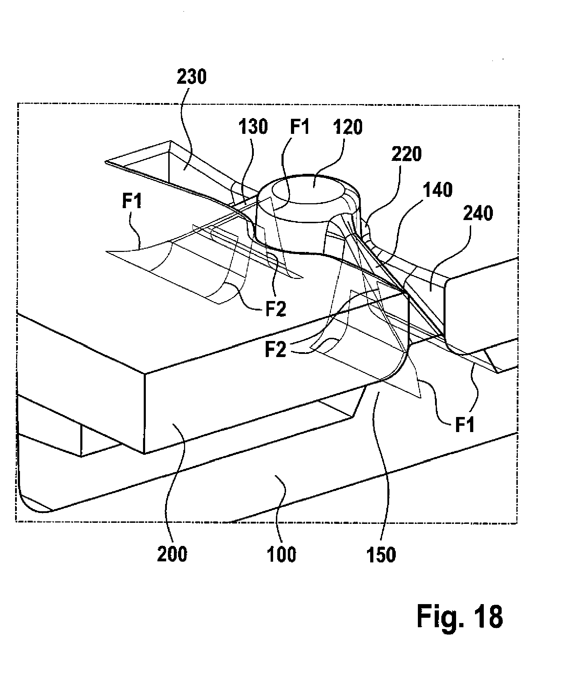

Fig. 18: eine weitere Detailansicht der Vorrichtung,

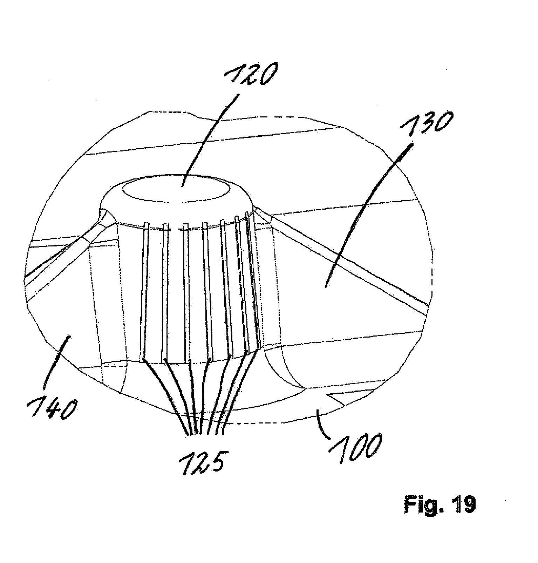

Fig. 19: eine Detailansicht eines ersten Bauteils gemäß einem weiteren Ausführungsbeispiel.

Es sei erwähnt, dass in den Figuren der Zeichnung nicht immer alle möglicherweise relevanten Bezugszeichen eingezeichnet werden, um die Darstellung zu vereinfachen. Da es sich bei den Darstellungen der Fig. 1 bis 18 um Ausführungen handelt, welche keine unterschiedlichen Ausführungsbeispiele beschreiben, wird bezüglich eventuell nicht dargestellter oder nicht eigens erwähnter bzw. beschriebener Merkmale auf Beschreibungen an anderer Stelle verwiesen. Es sei insbesondere auch erwähnt, dass alle in den Figuren sichtbaren Merkmale von erfindungswesentlicher Bedeutung sein können und somit auch zur Formulierung von den Schutzgegenstand einschränkenden oder abgrenzenden Merkmalen verwendet werden können. Dies gilt auch für in den Figuren dargestellte Dimensionen, insbesondere in Bezug auf den Vorsprung und die Ausnehmung. Während der Erfindungsgegenstand grundsätzlich nicht auf die dargestellten Dimensionen eingeschränkt ist, stellen diese Dimensionen bevorzugte Ausführungen dar und können einzeln oder zusammen beansprucht werden. Es sei verstanden, dass hierbei insbesondere relative Beziehungen von Dimensionen untereinander relevant sind.

Fig. 1 zeigt ein erstes Bauteil 100 gemäß einem ersten Ausführungsbeispiel. Das erste Bauteil 100 ist vorliegend wannenförmig ausgeführt. Es weist eine innere Oberfläche 105 auf, welche im Vergleich zu einem umgebenden Rand 107 zurückgesetzt ist. Das erste Bauteil 100 ist vorliegend in Form eines Basisbauteils ausgeführt, auf welche ein zweites Bauteil, welches weiter unten näher beschrieben werden wird, aufgesetzt werden kann. Es sei verstanden, dass alternativ auch das zweite Bauteil als Basisbauteil ausgeführt sein könnte.

Das erste Bauteil 100 weist einen auf der Oberfläche 105 ausgebildeten Vorsprung 110 auf. Der Vorsprung 110 erstreckt sich nach oben, wenn das erste Bauteil 100 mit seiner der Oberfläche 105 gegenüberliegenden Rückseite horizontal liegt, beispielsweise auf einer Unterlage aufliegt.

Der Vorsprung 110 weist einen Stab 120 auf. Dieser ist im Wesentlichen zylinderförmig ausgeführt und erstreckt sich mit einer Längsrichtung senkrecht zur Oberfläche 105. Seitlich zum Stab 120 sind ein erster Steg 130 und ein zweiter Steg 140 angeordnet. Diese sind bezüglich einer Symmetrieachse des Stabs 120 um 180° zueinander versetzt angeordnet. Der Stab 120 und die beiden Stege 130, 140 sind derart angeordnet, dass sie entlang einer gemeinsamen Linie angeordnet und ausgerichtet sind. Der Stab 120 steht dabei über die beiden Stege 130, 140 nach oben hinaus. Es sei jedoch verstanden, dass es sich bei der hier dargestellten Ausführung lediglich um eine bevorzugte Ausführung handelt. Eine Ausrichtung der Stege 130, 140 kann auch unsymmetrisch sein, insbesondere wenn der vorhandene Platz oder andere Anforderungen eines Anwendungsfalls dies erfordern. Es kann auch eine Gruppe von Stegen vorgesehen sein, welche nicht zwangsläufig aus zwei Stegen besteht, und welche um den Stab 120 herum angeordnet ist, und zwar mit gleichen oder nicht gleichen Winkeloffsets voneinander. Die weiter unten beschriebene Ausnehmung des zweiten Bauteils kann entsprechend komplementär ausgebildet sein.

Unter dem Vorsprung 110 ist eine Basis 150 angeordnet. Diese ist vorliegend kreuzförmig ausgebildet, wobei sie einen ersten Schenkel 152, einen zweiten Schenkel 154, einen dritten Schenkel 156 und einen vierten Schenkel 158 aufweist. Die jeweiligen Schenkel 152, 154, 156, 158 erheben sich jeweils über die Oberfläche 105.

Wie gezeigt ist der erste Steg 130 auf dem vierten Schenkel 158 angeordnet und der zweite Steg 140 ist auf dem zweiten Schenkel 154 angeordnet. Wie weiter unten beschrieben werden wird, dient die Basis 150 insbesondere dazu, einen Mindestabstand zwischen einem am ersten Bauteil 100 zu fixierenden zweiten Bauteil und dem ersten Bauteil 100 festzulegen. Der Stab 120 und die Stege 130, 140 dienen dazu, Position und Winkelbeziehung der beiden Bauteile zueinander festzulegen. Hierzu sei auf die nachfolgende Beschreibung verwiesen.

Die Fig. 2a und 2b zeigen ein zweites Bauteil 200. Fig. 2a zeigt dabei eine Ansicht von unten, wohingegen Fig. 2b eine Draufsicht zeigt. Unter diesen Lagebeziehungen sei eine Situation verstanden, in welcher das zweite Bauteil 200 auf das erste Bauteil 100 in der Lage, in welcher es in Fig. 1 dargestellt ist, aufgesteckt wird.

In dem zweiten Bauteil 200 ist eine Ausnehmung 210 ausgebildet. Die Ausnehmung 210 weist einen runden Abschnitt 220, einen ersten länglichen Abschnitt 230 und einen zweiten länglichen Abschnitt 240 auf. Wie weiter unten noch genauer beschrieben werden wird, ist der runde Abschnitt 220 komplementär zum Stab 120 ausgebildet, der erste längliche Abschnitt 230 ist komplementär zum ersten Steg 130 ausgebildet, und der zweite längliche Abschnitt 240 ist komplementär zum zweiten Steg 140 ausgebildet. Der runde Abschnitt 220, der erste längliche Abschnitt 230 und der zweite längliche Abschnitt 240 sind derart angeordnet, dass sie entlang einer geraden Linie angeordnet und ausgerichtet sind bzw. deren Längsachsen zueinander fluchtend ausgerichtet sind. Insgesamt kann durch eine solche Ausführung der Ausnehmung 210 der Vorsprung 110 des ersten Bauteils 100 zumindest teilweise in die Ausnehmung 210 des zweiten Bauteils 200 aufgenommen werden. Damit können die beiden Bauteile 100, 200 relativ zueinander fixiert werden.

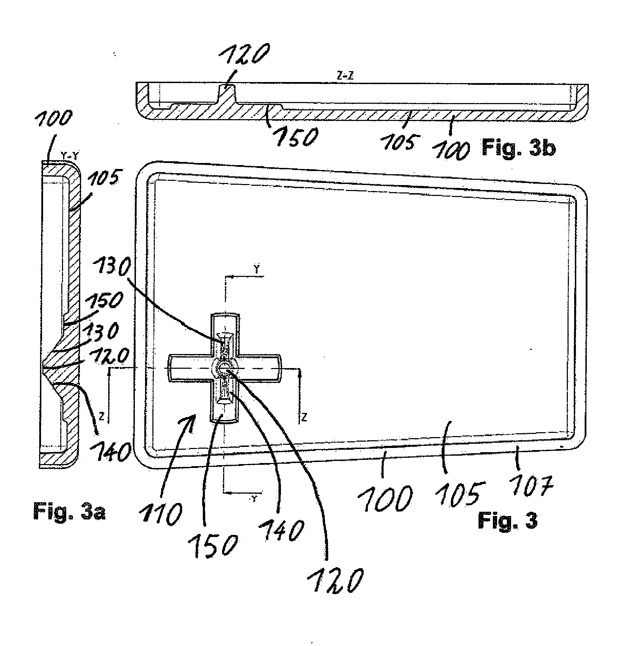

Fig. 3 zeigt das erste Bauteil 100 von Fig. 1 in einer Draufsicht. Fig. 3a zeigt das Bauteil 100 in einer Schnittansicht entlang der Linie Y-Y in Fig. 3. Fig. 3b zeigt das Bauteil 100 in einer Schnittansicht entlang der Linie Z-Z in Fig. 3. Dabei sind insbesondere die Profile des Stabs 120 und der Stege 130, 140 sowie der Basis 150 deutlicher zu erkennen.

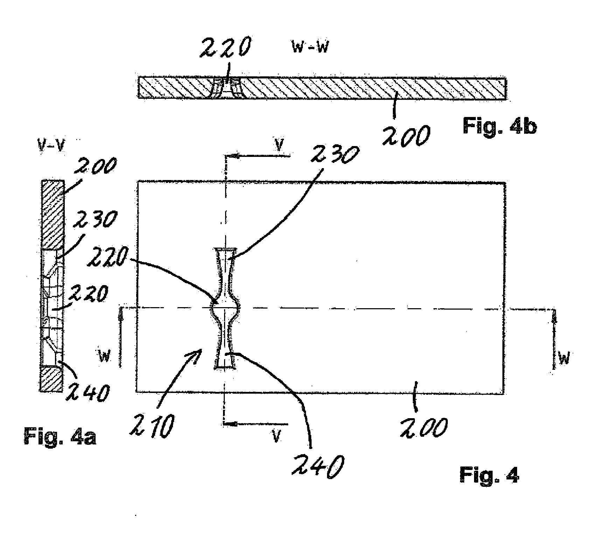

Fig. 4 zeigt das zweite Bauteil 200 in einer Draufsicht. Fig. 4a zeigt eine Schnittansicht durch das zweite Bauteil 200 entlang der Linie V-V in Fig. 4. Fig. 4b zeigt eine Schnittansicht durch das zweite Bauteil 200 entlang der Linie W-W in Fig. 4. Dabei sind insbesondere weitere Details der Ausnehmung 210 mit ihrem runden Abschnitt 220 und ihren länglichen Abschnitten 230, 240 zu erkennen.

Insbesondere ist in Fig. 4b zu erkennen, dass der runde Abschnitt 220 nach oben hin verjüngend ausgeführt ist. Anders ausgedrückt ändert sich der Durchmesser des runden Abschnitts 220 derart, dass er nach oben hin immer kleiner wird. Wie weiter unten näher beschrieben werden wird, erleichtert dies die Montage des zweiten Bauteils 200 auf dem ersten Bauteil 100 und auch eine Fixierung der beiden Bauteile 100, 200 relativ zueinander.

Zudem ist zu erkennen, dass die beiden länglichen Abschnitte 230, 240 sich mit zunehmendem Abstand vom runden Abschnitt 220 in der in Fig. 4 dargestellten Ebene aufweiten. Damit ähnelt sie der Form eines Querbinders bzw. einer Fliege. Wie weiter unten näher beschrieben werden wird, erleichtert dies die Schaffung einer definierten Winkelbeziehung der beiden Bauteile 100, 200 relativ zueinander während eines typischen Montagevorgangs.

Fig. 5 zeigt eine Vorrichtung 10, welche das erste Bauteil 100 und das zweite Bauteil 200 aufweist. Das zweite Bauteil 200 ist relativ zum ersten Bauteil 100 dadurch bezüglich Lage und Winkel fixiert, dass der Vorsprung 110 des ersten Bauteils 100 in die Ausnehmung 210 des zweiten Bauteils 200 aufgenommen ist. Fig. 5a zeigt eine Querschnittsansicht entlang der Linie A-A, und Fig. 5b zeigt eine Querschnittsansicht entlang der Linie B-B. Dabei ist insbesondere zu erkennen, dass der Stab 120 in dem runden Abschnitt 220 aufgenommen ist. Der erste Steg 130 ist in dem ersten länglichen Abschnitt 230 aufgenommen und der zweite Steg 240 ist in dem zweiten länglichen Abschnitt 240 aufgenommen.

Des Weiteren ist zu erkennen, dass das zweite Bauteil 200 auf der Basis 150 aufliegt, so dass dessen Abstand zum ersten Bauteil 100, insbesondere zur Oberfläche 105, auf diese Weise definiert wird. Der in Fig. 5a und in Fig. 5b dargestellte Abstand kann konstruktionsbedingt nicht unterschritten werden.

Durch die Aufnahme des Stabs 120 in dem runden Abschnitt 220 wird insbesondere die Position in einer durch die Oberfläche 105 definierten Ebene des zweiten Bauteils 200 relativ zum ersten Bauteil 100 definiert. Durch die in den jeweiligen länglichen Abschnitten 230, 240 aufgenommen Stege 130, 140 wird auch der Winkel des zweiten Bauteils 200 relativ zum ersten Bauteil 100 definiert. Somit sind das zweite Bauteil 200 und das erste Bauteil 100 relativ zueinander sowohl hinsichtlich Verschiebung wie auch hinsichtlich Drehung in einer Ebene definiert. Diese Ebene liegt insbesondere auch quer zum Stab 120, was vorliegend insbesondere bedeutet, dass sie quer zu einer Symmetrieachse des Stabs 120 liegt.

Es sei erwähnt, dass der Vorsprung 110 und die Ausnehmung 210 jeweils frei von Hinterschneidungen sind. Wie zu sehen ist sind sie glatt ausgebildet. Dies erleichtert ein Zusammenfügen und auch ein Entfernen der beiden Bauteile 100, 200.

Die Fig. 6 bis 11b zeigen das erste Bauteil 100 und das zweite Bauteil 200 in jeweiligen Zuständen, in welchen der Stab 120 in dem runden Abschnitt 220 aufgenommen ist, in welchen jedoch der aus Fig. 5a und 5b bekannte geringstmögliche Abstand zwischen den beiden Bauteilen 100, 200 noch nicht eingenommen wurde, und in welchen auch die in Fig. 5 dargestellte Winkelbeziehung zwischen den beiden Bauteilen 100, 200 noch nicht erreicht wurde. In der jeweils nur mit Zahl, nicht mit zusätzlichen Buchstaben bezeichneten Figur ist dabei der jeweilige Winkel angegeben, welchen das zweite Bauteil 200 relativ zum ersten Bauteil 100 einnimmt. Es handelt sich hierbei um einen Winkel einer Verdrehung des zweiten Bauteils 200 um eine Symmetrieachse des Stabs 120. Diese Figuren zeigen jeweilige Draufsichten.

In der jeweils mit dem Buchstaben "a" bezeichneten Figur ist eine Schnittansicht entlang einer in der jeweils ohne Buchstaben bezeichneten Figur eingezeichneten Linie gezeigt. Dabei kann ein entsprechender Versatz des zweiten länglichen Abschnitts 240 relativ zum zweiten Steg 140 erkannt werden. Außerdem kann dabei erkannt werden, wie mit abnehmendem Winkel der Abstand zwischen den beiden Bauteilen 100, 200 ebenfalls abnimmt.

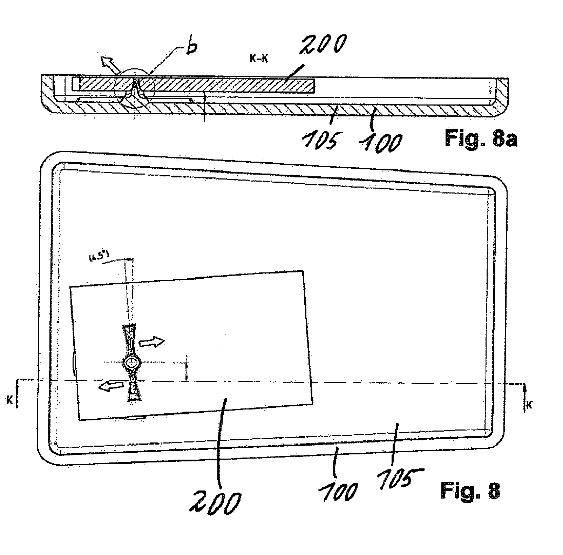

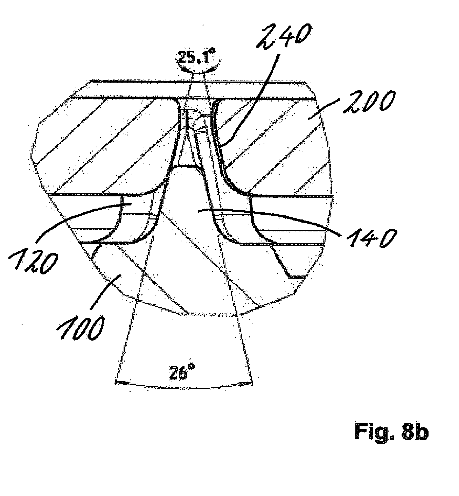

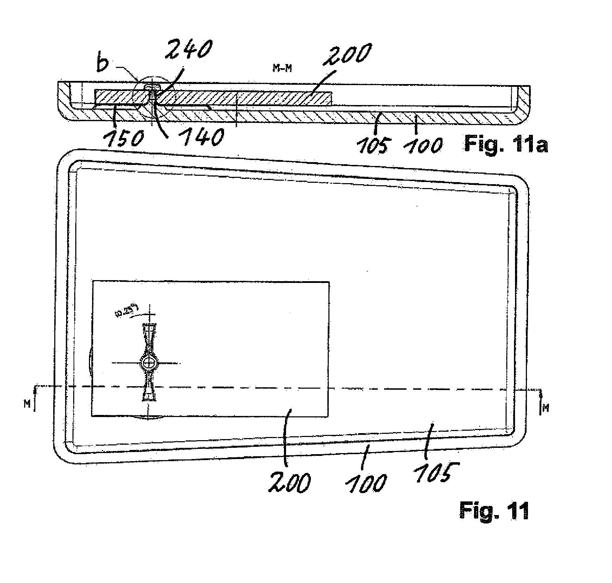

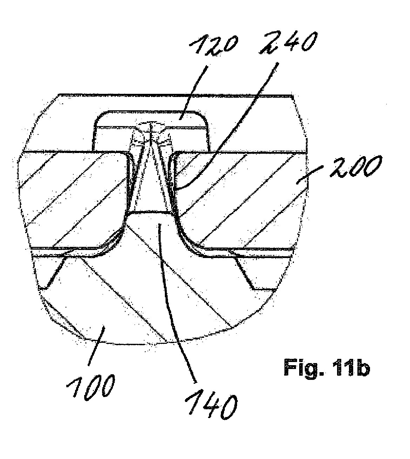

Detaillierte Ansichten eines Ausschnitts rund um den zweiten Steg 140 und den zweiten länglichen Abschnitt 240 zeigen die Fig. 8b und 11b, wobei in Fig. 8a bzw. 11a durch den jeweils mit "b" bezeichneten Kreis der Ausschnitt gekennzeichnet ist.

Insgesamt ist zu erkennen, dass der Winkel zwischen den beiden Bauteilen 100, 200 ausgehend von 12° in Fig. 6 bis auf 0,25° in Fig. 11 abnimmt. Dementsprechend ändert sich auch der Abstand zwischen den beiden Bauteilen 100, 200. Wie insbesondere an den jeweiligen Schnittansichten und den Detailansichten erkannt werden kann, erlaubt es die komplementäre Ausbildung des zweiten Stegs 140 und des zweiten länglichen Abschnitts 240 dem zweiten Bauelement 200, sich nur bis zu einem vom Winkel abhängigen Abstand an das erste Bauteil 100 anzunähern. Sowohl der zweite Steg 140 wie auch der zweite längliche Abschnitt 240 sind mit zunehmendem Abstand von der Oberfläche 105 verjüngend ausgebildet. Damit wird die beschriebene Relation zwischen Winkel und Abstand in erkennbarer Weise erreicht. Gleiches gilt im Übrigen für den ersten Steg 130 und den ersten länglichen Abschnitt 230.

Wie insbesondere auch erkannt werden kann ist es möglich, den Winkel zwischen den beiden Bauteilen 100, 200 durch Drücken des zweiten Bauteils 200 nach unten auf das erste Bauteil 100 dem gewünschten, in Fig. 5 dargestellten Winkel immer weiter anzunähern. Beispielhaft sind hierzu in den Fig. 8 und 8a jeweilige Pfeile eingezeichnet, welche eine auf das zweite Bauteil 200 beim Herunterdrücken wirkende Kraft anzeigen. Diese Kraft mit drehender Wirkung entsteht durch einen mittels der Formgebung des zweiten Stegs 140 und des zweiten länglichen Abschnitts 240 vermittelten Zwang, das zweite Bauteil 200 relativ zum ersten Bauteil 100 in die angezeigte Richtung zu drehen, wenn es sich dem ersten Bauteil 100 weiter annährend soll. Gleiches gilt im Übrigen für den ersten Steg 130 und den ersten länglichen Abschnitt 230.

Nachfolgend wird noch eine Übersicht gegeben, welchen Zusammenhang die dargestellten Winkel und Höhen in den einzelnen Figuren haben:

| Figuren | Winkel | Höhe |
|---|---|---|
| 6, 6a | 12° | 3, 5 mm |
| 7, 7a | 7,5° | 3 mm |
| 8, 8a, 8b | 4,5° | 2, 5 mm |
| 9, 9a | 2,7° | 2 mm |
| 10, 10a | 0,9° | 1,5 mm |
| 11, 11a, 11b | 0,25° | 1,25 mm |

Es sei verstanden, dass diese Werte nur für die hier als ein mögliches Ausführungsbeispiel gezeigte Ausführungsform gelten und die Erfindung nicht grundsätzlich einschränken. Es handelt sich hierbei jedoch um eine bevorzugte Ausführungsform. Wenn der Winkel auf 0° verringert wird, wie dies beispielsweise in Fig. 5 dargestellt ist, so beträgt der Abstand in der dargestellten Ausführungsform 1 mm.

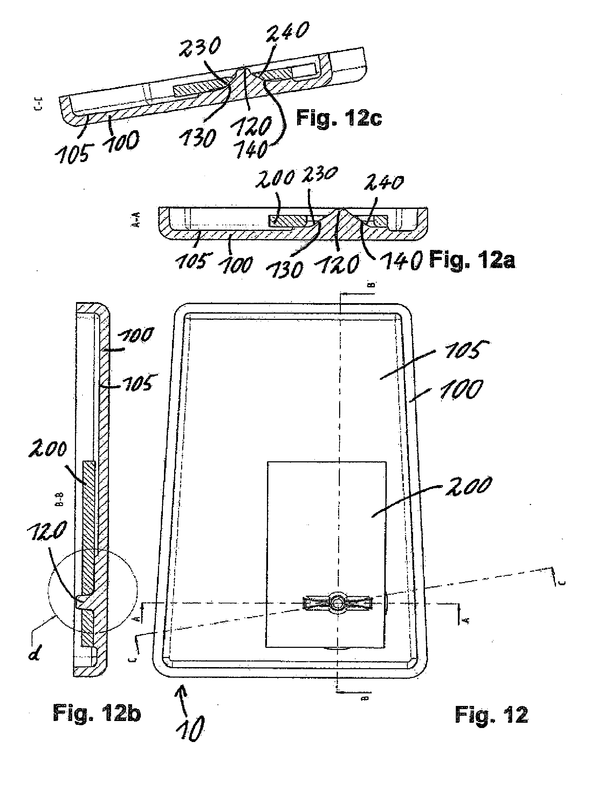

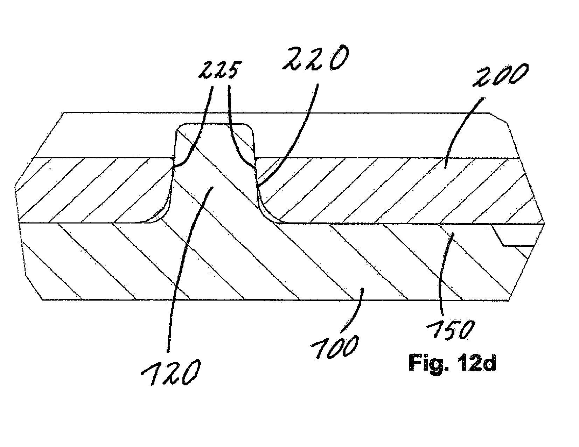

Fig. 12 zeigt eine Draufsicht auf die Vorrichtung 10 ähnlich zu derjenigen von Fig. 5. Die Fig. 12a, 12b und 12c zeigen jeweilige Schnittansichten entlang der Linien A-A, B-B bzw. C-C in Fig. 12, wobei die Darstellung ähnlich ist zu derjenigen der Fig. 5, 5a, 5b. Bezüglich der Beschreibung sei deshalb auf die weiter oben stehende Beschreibung verwiesen.

Fig. 12d zeigt einen Ausschnitt eines Bereichs, welcher in Fig. 12b durch den mit "d" gekennzeichneten Kreis angegeben ist. Dabei ist insbesondere zu erkennen, wie der runde Abschnitt 220 der Ausnehmung 210 des zweiten Bauteils 200 an dem Stab 120 anliegt. Insbesondere ist der runde Abschnitt 220 an dem. Stab 120 verklemmt, so dass an einem Klemmbereich 225, welcher im Wesentlichen Kontaktstellen zwischen den beiden Bauteilen 100, 200 enthält, eine Klemmkraft wirkt. Diese verhindert, dass das zweite Bauteil 200 unbeabsichtigt vom ersten Bauteil 100 entfernt wird. Hierzu ist zumindest die Überwindung dieser Klemmkraft erforderlich.

Fig. 13 zeigt einen Ausschnitt aus einer Querschnittsansicht ähnlich zu denjenigen, welche in Fig. 8b dargestellt ist, wobei insbesondere der zweite Steg 140 und der zweite längliche Abschnitt 240 zu sehen sind. Entlang einer Seitenfläche des zweiten Stegs 140 sind eine Anzahl von Punkten PNT0, PNT1, PNT2, PNT3, PNT4 und PNT5 eingezeichnet. Es handelt sich hierbei um typische Punkte, an welchen jeweils ein Punkt des zweiten länglichen Abschnitts 204 der Ausnehmung 210 des zweiten Bauteils 200 während einer Abstandsverringerung und Winkelangleichung, wie sie in den Fig. 6 bis 11b dargestellt wurde, anliegt. Dabei kann auch erkannt werden, dass bei abnehmendem Abstand zwischen dem zweiten Bauteil 200 und dem ersten Bauteil 100 eine in Fig. 13 nach links wirkende Kraft auf das zweite Bauteil 200 ausgeübt wird. Dessen Fixierung am Stab 120 führt dazu, dass es sich nur noch drehen kann, weshalb die Kraft wie bereits weiter oben angesprochenen drehend wirkt.

Die Fig. 14, 15 und 16 zeigen ähnliche Ausschnitte wie in Fig. 13, wobei jeweils der Punkt PNT0 eingezeichnet ist. Um die Übersichtlichkeit zu verbessern, wurde ein Teil des zweiten Bauteils 200 jeweils nicht dargestellt. Es handelt sich bei den Darstellungen der Fig. 14, 15 und 16 um plastische Ansichten, welche insbesondere ein besseres räumliches Bild von den Bauteilen 100, 200 vermitteln.

Des Weiteren ist auch deutlich zu erkennen, dass eine Oberfläche 135 des ersten Stegs 130 sich mit zunehmendem Abstand vom Stab 120 immer weiter ausweitet. Gleiches gilt für eine Oberfläche 145 des zweiten Stegs 130.

Fig. 17 zeigt eine perspektivische Ansicht des zweiten Bauteils 200 und des ersten Bauteils 100 in einer vollständig montierten Position, d.h. der Abstand wurde bis zum durch die Basis 150 vorgegebenen Mindestabstand verringert. Dabei ist zu erkennen, dass jeweilige etwa viertelkreisförmige Abschnitte des zweiten länglichen Abschnitts 240 an dem zweiten Steg 140 anliegen. Gleiches gilt im Übrigen für den ersten länglichen Abschnitt 230 und den zweiten Steg 130, welche in Fig. 17 nicht zu sehen sind.

Fig. 18 zeigt eine ähnliche Ansicht wie Fig. 17, jedoch ist ein etwas größerer Bereich dargestellt. Außerdem sind jeweilige Flächen des ersten Bauteils 100 und des zweiten Bauteils 200 eingezeichnet, welche im vollständig montierten Zustand aneinander anliegen und insbesondere die Winkelbeziehung der beiden Bauteile 100, 200 relativ zueinander definieren. Die zum ersten Bauteil 100 gehörenden Flächen sind dabei mit F1 bezeichnet. Die zum zweiten Bauteil gehörenden Flächen sind mit F2 bezeichnet. Diese Flächen F1, F2 sind wie gezeigt komplementär zueinander ausgebildet.

Fig. 19 zeigt einen Ausschnitt eines ersten Bauteils 100 gemäß einem zweiten Ausführungsbeispiel. Das erste Bauteil 100 gemäß dem zweiten Ausführungsbeispiel ist weitgehend identisch zum ersten Bauteil 100 gemäß dem ersten Ausführungsbeispiel ausgeführt. Als einziger Unterschied ist an dem Stab 120 außenseitig eine Anzahl von Vorsprüngen 125 angeordnet. Diese erstrecken sich entlang einer konischen Oberfläche, und zwar in Ebenen, welche die Symmetrieachse des Stabs 120 enthalten. Sie erstrecken sich vorliegend auch parallel zur Symmetrieachse und quer zur Oberfläche 105. Diese Vorsprünge sorgen insbesondere dafür, dass im montierten Zustand eine bessere Klemmwirkung zwischen dem Stab 120 und dem runden Abschnitt 220 erreicht wird. Ansonsten kann das erste Bauteil 100 gemäß dem zweiten Ausführungsbeispiel ebenso verwendet werden wie das erste Bauteil 100 gemäß dem ersten Ausführungsbeispiel. Die gesamte obige Beschreibung ist somit entsprechend anwendbar.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Vorrichtung (10), aufweisend ein erstes Bauteil (100) und ein zweites Bauteil (200),
- wobei das erste Bauteil (100) einen Vorsprung (110) aufweist und das zweite Bauteil (200) eine Ausnehmung (210) aufweist,
- wobei der Vorsprung (110) zumindest einen ersten Steg (130) und einen über den Steg (130) hinausstehenden Stab (120) aufweist,
- wobei die Ausnehmung (210) zumindest einen zum ersten Steg (130) komplementären ersten länglichen Abschnitt (230) und einen zum Stab (120) komplementären runden Abschnitt (220) aufweist,
- und wobei der Vorsprung (110) derart in der Ausnehmung (210) aufgenommen ist, dass das erste Bauteil (100) relativ zum zweiten Bauteil (200) zumindest hinsichtlich Verschiebung und Drehung in einer Ebene quer zum Stab (120) fixiert ist.

2. Vorrichtung (10) nach Anspruch 1,
- wobei der erste Steg (130) unmittelbar an den Stab (120) angrenzt, und
- wobei der erste längliche Abschnitt (230) unmittelbar an den runden Abschnitt (220) angrenzt.

3. Vorrichtung (10) nach einem der vorhergehenden Ansprüche,
- wobei der Vorsprung (110) ferner einen zweiten Steg (140) aufweist, und
- wobei die Ausnehmung (210) ferner einen zum zweiten Steg (140) komplementären zweiten länglichen Abschnitt (240) aufweist.

4. Vorrichtung (10) nach Anspruch 3,
- wobei der Stab (120) zwischen dem ersten Steg (130) und dem zweiten Steg (140) angeordnet ist, und
- wobei der runde Abschnitt (220) zwischen dem ersten länglichen Abschnitt (230) und dem zweiten länglichen Abschnitt (230) angeordnet ist.

5. Vorrichtung (10) nach einem der Ansprüche 3 oder 4,
- wobei der zweite Steg (140) unmittelbar an den Stab (120) angrenzt, und
- wobei der zweite längliche Abschnitt (240) unmittelbar an den runden Abschnitt (220) angrenzt.

6. Vorrichtung (10) nach einem der Ansprüche 3 bis 5,
- wobei der erste Steg (130), der Stab (120) und der zweite Steg (140) entlang einer gedachten geraden Linie angeordnet sind, und
- wobei der erste längliche Abschnitt (230), der runde Abschnitt (220) und der zweite längliche Abschnitt (240) entlang einer gedachten geraden Linie angeordnet sind.

7. Vorrichtung (10) nach einem der vorhergehenden Ansprüche,
- wobei der Vorsprung (110) und die Ausnehmung (210) frei von Hinterschneidungen sind.

8. Vorrichtung (10) nach einem der vorhergehenden Ansprüche,
- wobei der Stab (120) an seinem freien Ende einen Abschnitt aufweist, in welchem sich der Stab (120) zum freien Ende hin verjüngt.

9. Vorrichtung (10) nach einem der vorhergehenden Ansprüche,
- wobei das erste Bauteil (100) ferner eine Basis (150) aufweist, welche unterhalb des Vorsprungs (110) angeordnet ist und einen Mindestabstand zwischen dem ersten Bauteil (100) und dem zweiten Bauteil (200) definiert.

10. Vorrichtung (10) nach Anspruch 9,
- wobei die Basis (150) kreuzförmig ausgebildet ist.

11. Vorrichtung (10) nach einem der vorhergehenden Ansprüche,
- wobei der runde Abschnitt (220) mit zunehmendem Abstand vom ersten Bauteil (100) verjüngend ausgebildet ist.

12. Vorrichtung (10) nach einem der vorhergehenden Ansprüche,
- wobei der erste längliche Abschnitt (230) und/oder der zweite längliche Abschnitt (240) mit zunehmendem Abstand vom ersten Bauteil (100) verjüngend ausgebildet sind.

13. Vorrichtung (10) nach einem der vorhergehenden Ansprüche,
- wobei der runde Abschnitt (220) einen Klemmbereich (225) aufweist, welcher im montierten Zustand vom Stab (120) elastisch deformiert ist und dadurch eine Klemmwirkung zwischen dem runden Abschnitt (220) und dem Stab (120) erzeugt;
und/oder
- wobei der Stab (120) außenseitig eine Anzahl von Vorsprüngen (125) aufweist, welche sich bevorzugt zumindest im Wesentlichen parallel zum runden Stab (120) erstrecken.

14. Vorrichtung (10) nach einem der vorhergehenden Ansprüche,
- wobei der erste Steg (130) und/oder der zweite Steg (140) eine jeweilige Oberseite (135, 145) aufweisen, welche mit zunehmender Entfernung vom Stab (120) abfallend ausgebildet ist.

15. Verfahren zum Herstellen einer Vorrichtung (10) nach einem der vorhergehenden Ansprüche, welches folgende Schritte aufweist:
- Aufsetzen des zweiten Bauteils (200) auf den Vorsprung (110) des ersten Bauteils (100) derart, dass der Stab (120) in den runden Abschnitt (220) aufgenommen wird,
- Verringern des Abstands zwischen dem zweiten Bauteil (200) und dem ersten Bauteil (100), dabei Drehen des zweiten Bauteils (200) relativ zum ersten Bauteil (100) derart, dass die Stege (130, 140) in jeweils einem der länglichen Abschnitte (230, 240) aufgenommen werden,
- und zwar so lange, bis ein konstruktiv vorgegebener Mindestabstand erreicht wird.
